# EUROPÄISCHE PATENTSCHRIFT

(11) **EP 2 331 312 B1**
(45) Veröffentlichungstag und Bekanntmachung des Hinweises auf die Patenterteilung: **15.11.2017**
(21) Anmeldenummer: 09778547.1
(22) Anmeldetag: 16.09.2009
(51) Int. Cl.: B29C 44/04, B29C 39/12, B60N 2/64, B29C 44/14, B29C 44/16, B29L 31/58

(54) **VERFAHREN UND WERKZEUG ZUR HERSTELLUNG EINES POLSTERELEMENTS**
METHOD AND TOOL FOR PRODUCING A CUSHION ELEMENT
PROCÉDÉ ET OUTIL DE RÉALISATION D'UN ÉLÉMENT DE REMBOURRAGE

(30) Priorität: 23.09.2008 DE 102008048591; 25.03.2009 DE 102009014881
(43) Veröffentlichungstag der Anmeldung: 15.06.2011
(73) Patentinhaber: Adient Luxembourg Holding S.à r.l., 2453 Luxembourg (LU)
(72) Erfinder: STEINMEIER, Horst, 32312 Lübbecke (DE); HASLER, Alexander, 40219 Düsseldorf (DE); STOLL, Dominik, 33154 Salzkotten (DE)
(74) Vertreter: Liedhegener, Ralf
(86) Internationale Anmeldenummer: PCT/EP2009/006686
(87) Internationale Veröffentlichungsnummer: WO 2010/034424

(56) Entgegenhaltungen:
- EP-A2- 0 247 708
- EP-A2- 0 298 339
- DE-A1- 3 512 244
- JP-A- 3 219 925
- JP-A- 2002 273 744

## Beschreibung

Die Erfindung betrifft ein Verfahren zur Herstellung eines und ein zur Durchführung des Verfahrens geeignetes Werkzeug.

### Stand der Technik

Ein Polsterelement der eingangs genannten Art ist aus der Offenlegungsschrift DE 100 16 350 A1 bekannt. Das für den Einsatz in Sitzteilen oder Rückenlehnen von Fahrzeugsitzen vorgesehene Polsterelement besteht aus einem ersten und einem zweiten geschäumten Bereich, die durch ein Netzwerk in Form einer Gaze, eines Vlieses oder dergleichen räumlich voneinander getrennt sind. Das Netzwerk kann entweder zweidimensional oder aber in Form einer Tasche dreidimensional vorgeformt ausgebildet sein. Nach einer Ausbildung des dort offenbarten Verfahrens wird die Tasche über ein geöffnetes Werkzeug gespannt, in welches bereits eine schäumfähige Weichschaummasse eingebracht wurde. Die Tasche wird mit einer schäumfähigen Hartschaummasse gefüllt und baucht sich beim Aufschäumen dieser Masse unter Ausbildung eines dreidimensionalen Trennelements auf, welches den Hartschaum räumlich zum Weichschaum trennt.

Durch Anwendung dieses Verfahrens lassen sich zwar komfortable Polsterelement mit unterschiedlichen Härtezonen fertigen, die räumlichen Gestaltungsmöglichkeiten sind jedoch eingeschränkt. Ferner ist das Spannen der Tasche in dem mit der bereits aufschäumenden Weichschaummasse gefüllten Werkzeug aufwändig.

In der Patentschrift DE 10 2004 018 001 B4 wird ein Fahrzeugsitz beschrieben, bei welchem ein aus PUR-Hartschaum gesondert gefertigtes, adapterartiges Rahmenelement auf die metallische Struktur des Sitzteils aufgesetzt wird. Auf das Rahmenelement wird nachfolgend ein gleichfalls gesondert hergestelltes Sitzkissenpolster aufgelegt, welches das Rahmenelement ganz oder teilweise überdeckt. Die Anordnung aus Sitzkissenpolster und Rahmenelement wird anschließend mit einem Bezug versehen. Der vordere Querholm des Rahmenelements ist dabei nach vorne rampenförmig ansteigend ausgebildet und soll das Durchtauchen eines Sitzinsassen unter dem beckenseitigen Trum des Sicherheitsgurts verhindern (Anti-Submarining). Ein derartiges Vorgehen ist aufgrund der hohen Zahl unabhängig voneinander gefertigter Komponenten sehr kostenintensiv.

In der Offenlegungsschrift DE 198 44 307 A1 wird ferner ein Fahrzeugsitz offenbart, dessen Sitzpolster im vorderen Bereich mit einem Einsatz in Form eines Deformationskörpers versehen ist. Der Einsatz besteht aus einem offenporigen Schaum, dessen Steifheit von der Deformationsgeschwindigkeit abhängt und der vollständig in das Sitzpolster eingebettet ist. Über die Fertigung dieses Verbundes wird in diesem Dokument keine Aussage getroffen.

Aus der JP 3 219925 A ist ein Verfahren zur Herstellung eines Polsterelements bekannt, bei welchem in ein Werkzeug ein zur Ausbildung einer dreidimensionalen Trennzone geeignetes Bauteil eingebracht und nachfolgend mindestens eine erste schäumfähige Masse in einen ersten Raumbereich des Werkzeugs eingefüllt wird, wobei beim Verschäumen dieser Masse das Bauteil zu einem dreidimensionalen Trennelement zwischen einem ersten geschäumten Polsterbereich und einem weiteren Raumbereich im Werkzeug ausgeformt wird, wobei das Bauteil während der Ausformung zum dreidimensionalen Trennelement gegen ein Widerlager im Werkzeug gepresst wird. Die JP 3 219925 A offenbart zudem ein Werkzeug geeignet zur Durchführung eines solchen Verfahrens, wobei das Werkzeug mindestens ein Oberwerkzeug, ein Unterwerkzeug und ein Widerlager geeignet zur Anlage eines sich dreidimensional ausformenden Bauteils aufweist.

Die EP 0 298 339 A2 offenbart ein Verfahren zum Herstellen eines mit einem textilen Bezug versehenen Polsters, insbesondere Fahrzeugsitzpolsters, durch Hinterschäumen, wobei der Bezug auf dem Rand eines einen Formhohlraum zumindest teilweise enthaltenden Vakuumformwerkzeugteils aufgelegt und gespannt wird, bevor an den Formhohlraum Vakuum angelegt und der Bezug angesaugt und positioniert wird, und anschließend ein Schaumstoff bildendes Reaktionsgemisch auf die Rückseite des Bezuges aufgegeben und nach dem Aushärten des Reaktionsgemisches zum Schaumstoffkern das Polster entformt wird.

### Aufgabe

Der Erfindung liegt die Aufgabe zugrunde, ein Verfahren und ein Werkzeug für die Herstellung eines Polsterelements mit großem Gestaltungsfreiraum bereitzustellen, das mit geringem Fertigungsaufwand auch die Ausbildung komplex geformter Sicherheitseinrichtungen, insbesondere einer Anti-Submarining-Rampe, ermöglicht.

### Lösung

Die Aufgabe wird bei einem gattungsgemäßen Verfahren gemäß Anspruch 1 dadurch gelöst, dass das Bauteil während der Ausformung zum dreidimensionalen Trennelement gegen ein Widerlager im Werkzeug gepresst wird. Ein zur Durchführung des Verfahrens geeignetes Werkzeug gemäß Anspruch 3 zeichnet sich dadurch aus, dass das Werkzeug mindestens ein Oberwerkzeug, ein Unterwerkzeug und ein Widerlager zur Anlage eines sich dreidimensional ausformenden Bauteils aufweist.

Durch das Einbringen des dreidimensional verformbaren Flächengebildes in das Werkzeug und dessen nachfolgendes Ausformen zu einem dreidimensionalen Trennelement lassen sich in einem geschäumten Polsterelement auf kostengünstige Weise komplex geformte Zonen mit unterschiedlichen Eigenschaften, insbesondere unterschiedlicher Härte, ausbilden. Diese Zonen können insbesondere besondere Sicherheitsmerkmale eines Fahrzeugsitzes darstellen, aber auch den Sitzkomfort des Polsterelements hinsichtlich Härte oder Ventilation positiv beeinflussen.

Die Unteransprüche betreffen bevorzugte Ausführungsformen der Erfindung.

Hinsichtlich des Verfahrens ist mit Vorteil vorgesehen, dass in das Schäumwerkzeug ein zur Ausbildung einer dreidimensionalen Trennzone geeignetes Bauteil eingebracht wird, nachfolgend mindestens eine erste schäumfähige Masse in einen ersten Raumbereich und eine zweite schäumfähige Masse in einen zweiten Raumbereich eingefüllt werden und beim Verschäumen dieser Massen das Bauteil zu einem dreidimensionalen Trennelement zwischen einem ersten geschäumten Polsterbereich und einem zweiten geschäumten Polsterbereich des Polsterelements ausgeformt wird. Das Schäumen der unterschiedlichen Schaumzonen erfolgt also zeitnah, wodurch die Zykluszeiten bei der Polsterfertigung verkürzt werden können. Die Schäumdrücke in den unterschiedlichen Zonen sind dabei so zu bemessen, dass sich das Trennelement in die gewünschte Richtung ausformt.

Nach einem weiteren vorteilhaften Vorgehen, nicht gemäß Anspruch 1, wird das Bauteil vor dem Einfüllen der schäumfähigen Massen bereits dreidimensional in das Werkzeug eingebracht. Das Bauteil kann dabei beispielsweise aus einem genähten oder zumindest teilweise vorgeformten Flächengebilde bestehen, so dass an die Verformbarkeit im Zuge der weiteren Fertigkeit geringere Anfordungen gestellt werden und auch mit weniger dehnbaren Flächengebilden besonders komplex geformte Zonenverläufe ausgebildet werden können.

Besonders kostengünstig ist hingegen ein Vorgehen, bei welchem das Bauteil vor dem Einfüllen der schäumfähigen Massen zweidimensional, beispielsweise in Form eines einfachen Textilzuschnitts, in das Werkzeug eingebracht wird.

In beiden Fällen ist vorgesehen, dass das das Bauteil vor dem Einfüllen der schäumfähigen Massen im Werkzeug schlupffähig gespannt wird. Die dreidimensionale Ausformung des Trennelements erfolgt somit nicht oder zumindest nicht nur durch Dehnung des Flächengebildes, sondern durch Nachführen eines Überschusses des Zuschnitts in das Werkzeug. Dabei gegebenenfalls auftretende Falten im Trennelement sind ohne Belang.

Ein Werkzeug zur Durchführung des zuvor beschriebenen Verfahrens weist Mittel zur Aufnahme des sich dreidimensional verformenden Bauteils auf, wobei die Mittel einen Schlupfrahmen umfassen. Dieser Schlupfrahmen umfasst den Zuschnitt für das Trennelement vollumfänglich oder zumindest in wesentlichen Umfangsbereichen und sorgt hierdurch für eine präzise Anordnung des Bauteils im Werkzeug. Der Überschuss des Zuschnitts ragt dabei nach außen aus dem Schlupfrahmen heraus und wird während des Schäumvorgangs ohne Verlust der Schlupfkraft in das Rahmeninnere und damit in Richtung der Kavität des Werkzeugs gezogen.

Konstruktiv besonders einfach ist dabei ein Schlupfrahmen, welcher unmittelbar zwischen Oberwerkzeug und Unterwerkzeug ausgebildet ist und den Zuschnitt beim Schließen des Werkzeugs automatisch fasst. In einer Variante, nicht gemäß Anspruch 3, ist grundsätzlich jedoch auch vorstellbar, einen gesonderten Schlupfrahmen vorzusehen, welcher das Werkzeug umgibt, so dass die Spannung des Zuschnitts vor dem Schließen des Werkzeugs geprüft und gegebenenfalls korrigiert werden kann.

Nach einer vorteilhaften Ausführung, nicht gemäß Anspruch 3, ist das Widerlager zur Anlage des sich dreidimensional ausformenden Bauteils lösbar mit Ober- und/oder Unterwerkzeug des Werkzeugs verbunden. Bei der Ausbildung einer Anti-Submarining-Rampe kann das Widerlager zum Beispiel aus einem dreidimensional geformten, mit Durchbrüchen versehenen Blechteil bestehen. Gemäß Anspruch 3 ist das Widerlager fest mit dem Werkzeug verbunden und besteht aus einer Vielzahl von in die Kavität des Werkzeugs auskragenden, beispielsweise konischen Stiften besteht, deren freien Enden zur Anlage des Bauteils vorgesehen sind. Nach dem Herausziehen der Stifte entstehen im Polsterkörper radial verlaufende Kanäle, welche die Eigenschaften des Polsterkörpers nicht negativ beeinflussen und hinsichtlich des Sitzklimas sogar verbessern können.

Ein vorteilhaftes Polsterelement zeichnet sich dadurch aus, dass der erste geschäumte Polsterbereich eine größere Härte als der zweite geschäumte Polsterbereich aufweist, wobei die Oberseite des ersten geschäumten Polsterbereich mit Vorteil rampenförmig und zur Sitzvorderkante hin ansteigend ausgebildet ist. Hierdurch wird auf einfache und dennoch wirkungsvolle Weise eine Anti-Submarining-Rampe erzeugt.

Zur Verbesserung des Komforts ist der zweite geschäumte Polsterbereich dabei bevorzugt so ausgebildet, dass er den ersten geschäumten Polsterbereich von oben her zumindest teilweise überdeckt.

Es kann jedoch mit Vorteil vorgesehen werden, dass sich der erste geschäumte Polsterbereich bis zu einer Flächenseite, insbesondere der Unterseite des Polsterelements erstreckt. Hierdurch wird das Einfüllen der zur Ausbildung des ersten Polsterbereich vorgesehenen, schäumfähigen Masse in das Werkzeug vereinfacht, ohne dass Einbußen hinsichtlich des Komforts hinzunehmen sind. Grundsätzlich wäre jedoch auch vorstellbar, die erste schäumfähige Masse mittels einer Lanze in ein geschlossen vorgeformtes, beispielsweise kugelförmiges Trennelement zu injizieren, welches bei der Fertigung durch das Widerlager in Abstand zu den Werkzeugwandungen gehalten wird.

Das Trennelement ist mit Vorteil gasdurchlässig ausgebildet, so dass beim Verschäumen aus der schaumfähigen Masse austretendes Gas sowie die von der sich ausbreitenden Schaumfront verdrängte Luft über alle Raumbereiche des Werkzeugs hinweg aus diesem abgeführt werden können. Unerwünschte Lunker oder mangelhaft verschäumte Polsterbereiche werden hierdurch vermieden. Im Gegenzug stellt das Trennelement der schäumfähigen Masse bevorzugt nicht nur einen erhöhten Strömungswiderstand entgegen, sondern ist hinsichtlich der zur Erzeugung des ersten oder zweiten geschäumten Bereichs verwendeten schäumfähigen Massen im Wesentlichen dicht ausgebildet ist. Hierdurch wird eine besonders klare Trennung zwischen den Schaumzonen hervorgerufen.

Zur Einsatz als Trennelement ist insbesondere ein textiles Flächengebilde, beispielsweise ein Vlies, Gewebe oder Gewirke, geeignet, welches kostengünstig zu beschaffen ist und beim späteren Gebrauch des Polsterelements den Sitzkomfort nicht nennenswert beeinflusst.

### Figuren

Die Figuren stellen beispielhaft und schematisch verschiedene Ausführungen der Erfindung dar.

Es zeigen:
- Fig. 1: einen Fahrzeugsitz mit einem erfindungsgemäß ausgebildeten Sitzpolster;
- Fig. 2: den Prozessablauf bei Anwendung eines ersten erfindungsgemäßen Verfahrens unter Verwendung eines Werkzeugs nach einer Ausführung der Erfindung (Fig. 2a-d);
- Fig. 3: die Ausbildung eines alternativen Werkzeugs;
- Fig. 4: ein Werkzeug nach einer anderen bevorzugten Ausführung der Erfindung.

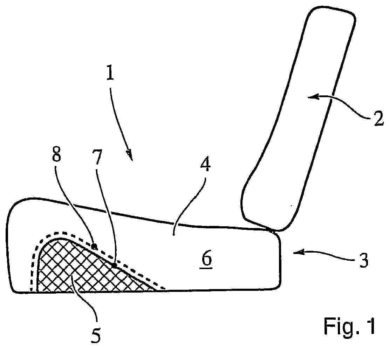

Der in Fig. 1 gezeigte Fahrzeugsitz 1 für ein Kraftfahrzeug besteht aus einer Rückenlehne 2 und einem Sitzpolster 3, dessen Polsterelement 4 einen ersten geschäumten Polsterbereich 5 aus einem relativ harten Schaum und einen zweiten geschäumten Polsterbereich 6 aus einem relativ weichen Schaum aufweist. Der harte Polsterbereich 5 erstreckt sich im Wesentlichen im vorderen Teil des Polsterelements 4. Die obere Fläche 7 des Polsterbereichs 5 steigt dabei von hinten nach vorne rampenartig an und bildet eine Vorrichtung zur Vermeidung des Durchtauchens des Sitzinsassen durch den Sicherheitsgurt aus.

Richtungs- und Ortsangaben beziehen sich auf die übliche Einbaulage eines Kraftfahrzeugsitzes.

Zwischen dem ersten Polsterbereich 5 und dem zweiten Polsterbereich 6 ist ein textiles, dreidimensional geformtes Trennelement 8 angeordnet, welches zwar gasdurchlässig, jedoch undurchlässig für die flüssigen, zur Ausbildung der Polsterbereiche 5 und 6 vorgesehenen schäumfähigen Massen ist.

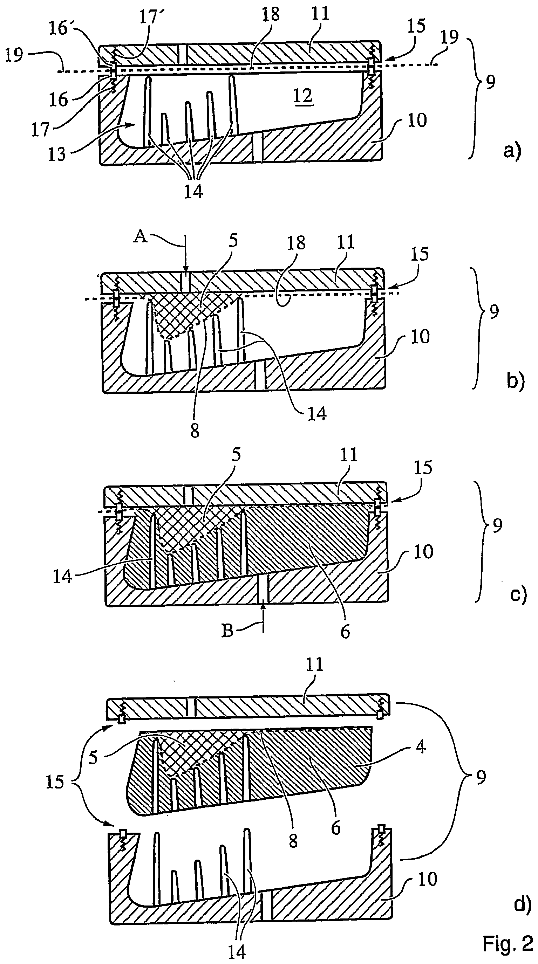

Fig. 2 stellt den Ablauf bei der Fertigung eines derartigen Polsterelements 4 sowie ein hierzu geeignetes Werkzeug 9 dar. Das Werkzeug 9 besteht aus einem wannenartigen Unterwerkzeug 10 und einem deckelförmigen Oberwerkzeug 11, die gemeinsam eine Kavität 12 zum Befüllen mit den schäumfähigen Massen ausbilden. Die Fertigung des Sitzteils 4 erfolgt dabei um 180° gegenüber der späteren Einbaulage gedreht, so dass die Sitzfläche während der Fertigung nach unten weist. Das Unterwerkzeug 10 ist im Übergang zwischen den Polsterbereichen 5 und 6 mit einem Widerlager 13 versehen, welches aus einer Anzahl unterschiedlich langer, sich vom Unterwerkzeug 10 in der Kavität 12 nach oben erstreckenden und konisch verjüngten Stifte 14 besteht. Im Übergangsbereich zwischen Unterwerkzeug 10 und Oberwerkzeug 11 ist ferner ein Schlupfrahmen 15 angeordnet. Dieser besteht aus dem Unterwerkzeug 10 und dem Oberwerkzeug 11 zugeordneten Rahmenteilen 16, 16', die über Federn 17, 17' aufeinander zu spannbar sind.

Am Anfang des Verfahrenszyklus werden die der Kavität 12 zugewandten Oberflächen des Werkzeugs 9 mit einem Trennmittel besprüht. Anschließend werden ein zweidimensional zugeschnittenes Bauteil 18, welches zur Ausbildung des Trennelements 8 vorgesehen ist, zwischen Unterwerkzeug 10 und Oberwerkzeug 11 gelegt und das Werkzeug 9 geschlossen. Dabei wird das Bauteil 18 vom Schlupfrahmen 15 unter leichter Vorspannung gefasst (Fig. 2a).

Nachfolgend wird eine erste schäumfähige Masse (Pfeil A) durch eine Öffnung im Oberwerkzeug 11 in den Teil der Kavität 12 eingefüllt, in welchem sich der erste, relativ harte Polsterbereich 5 ausbildet (Fig. 2b). Der Druck der aufschäumenden Masse presst das vormals ebene Bauteil 18 gegen das Widerlager 13 und verformt dieses zu dem dreidimensionalen Trennelement 8, wobei ein Überstand 19 des Zuschnitts durch die gegeneinander gespannten Rahmenteile 16, 16' gezogen wird. Die Schlupfkraft ist dabei so bemessen, dass dieses Durchziehen ohne Beschädigung des Bauteils 18 erfolgt, das Trennelement 8 aber so unter Spannung gehalten wird, dass es nicht in nennenswerter Weise ausbauchend in die Zwischenräume zwischen den Stiften 14 gepresst wird.

Anschließend wird über das Unterwerkzeug 10 die schäumfähige Masse für den weichen geschäumten Polsterbereich 6 in die Kavität gespeist (Pfeil B), welche den verbleibenden Hohlraum ausfüllt (Fig. 2c). Nach dem Öffnen des Oberwerkzeugs 11 (Fig. 2d) kann das Polsterelement 4 aus dem Werkzeug 9 entnommen werden, wobei die das Widerlager 13 bildenden Stifte 14 aus dem Polsterelement 4 unter Ausbildung von Kanälen im Schaumteil herausgezogen werden. Das Bauteil 18 verbleibt als Trennelement 8 dauerhaft im Polsterelement 4. Das Einspeisen der schäumfähigen Massen (Pfeile A, B) kann grundsätzlich auch zeitnah oder sogar zeitgleich vorgenommen werden, sofern die dabei entstehenden Schäumdrücke das Bauteil 18 in der gezeigten Weise gegen das Widerlager 13 pressen.

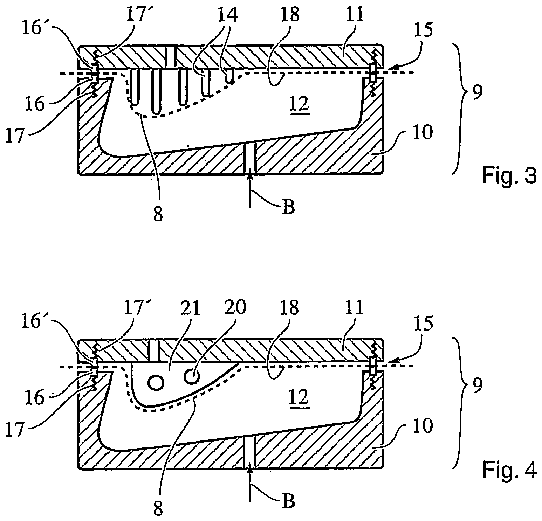

Bei dem in Fig. 3 gezeigten Werkzeug 9 sind die das Widerlager 13 bildenden Stifte 14 am Oberwerkzeug 11 angeordnet und ragen nach unten in die Kavität 12 hinein. Das Bauteil 18 wird von der zunächst von der durch das Unterwerkzeug 10 zugeführten Masse (Pfeil B) zur Ausbildung des weichen geschäumten Polsterbereichs 6 nach oben gegen die Stifte 14 gepresst und bildet dabei das Trennelement 8 aus.

Das Werkzeug 9 nach Fig. 4 unterscheidet sich von der Ausführung nach Fig. 3 dadurch, dass das Widerlager 13 durch ein dreidimensionales, mit Durchbrüchen 20 versehenes Blechteil 21 gebildet wird, gegen das sich das das Trennelement 8 bildende Bauteil 18 unter dem Druck der von unten zugeführten Masse (Pfeil B) für den weichen geschäumten Polsterbereich 6 presst.Nachfolgend wird das Werkzeug 9 geöffnet und das Blechteil 21 entfernt. Nach dem erneuten Schließen des Werkzeugs 9 kann der harte Polsterbereich 5 geschäumt werden.

### Bezugszeichen

- 1: Fahrzeugsitz
- 2: Rückenlehne
- 3: Sitzpolster
- 4: Polsterelement
- 5: geschäumter Polsterbereich (hart)
- 6: geschäumter Polsterbereich (weich)
- 7: Fläche (des Polsterbereichs 5)
- 8: Trennelement
- 9: Werkzeug
- 10: Unterwerkzeug
- 11: Oberwerkzeug
- 12: Kavität
- 13: Widerlager
- 14: Stift
- 15: Schlupfrahmen
- 16, 16': Rahmenteil
- 17, 17': Feder
- 18: Bauteil
- 19: Überstand
- 20: Durchbruch
- 21: Blechteil

## Patentansprüche

1. Verfahren zur Herstellung eines Polsterelements (4), bei welchem in ein Werkzeug (9) ein zur Ausbildung einer dreidimensionalen Trennzone geeignetes Bauteil (18) eingebracht und
nachfolgend mindestens eine erste schäumfähige Masse in einen ersten Raumbereich des Werkzeugs (9) eingefüllt wird, wobei beim Verschäumen dieser Masse das Bauteil (18) zu einem dreidimensionalen Trennelement (8) zwischen einem ersten geschäumten Polsterbereich (5) und einem weiteren Raumbereich im Werkzeug (9) ausgeformt und das Bauteil (18) während der Ausformung zum dreidimensionalen Trennelement (8) gegen ein Widerlager (13) im Werkzeug (9) gepresst wird, wobei das Bauteil (18) vor dem Einfüllen der schäumfähigen Massen zweidimensional in das Werkzeug (9) eingebracht und schlupffähig gespannt wird, **dadurch gekennzeichnet, dass**
das Widerlager (13) im Zuge der Fertigung des Polsterelements (4) aus diesem entfernt wird.

2. Verfahren zur Herstellung eines Polsterelements nach Anspruch 1, **dadurch gekennzeichnet, dass** eine zweite schäumfähige Masse in einen zweiten Raumbereich des Werkzeugs (9) eingefüllt und beim Verschäumen der ersten und zweiten schäumfähigen Masse das Bauteil (18) zu einem dreidimensionalen Trennelement (8) zwischen einem ersten geschäumten Polsterbereich (5) und einem zweiten geschäumten Polsterbereich (6) des Polsterelements (4) ausgeformt wird.

3. Werkzeug zur Durchführung des Verfahrens nach einem der Ansprüche 1 bis 2, wobei das Werkzeug (9) mindestens ein Oberwerkzeug (11), ein Unterwerkzeug (10) und ein Widerlager (13) zur Anlage eines sich dreidimensional ausformenden Bauteils (18) und Mittel zur Aufnahme eines Bauteils (18) in Form eines dreidimensional ausformbaren Flächengebildes aufweist, wobei die Mittel zur Aufnahme des Bauteils (18) einen Schlupfrahmen (15) umfassen, wobei der Schlupfrahmen (15) zwischen Oberwerkzeug (11) und Unterwerkzeug (10) ausgebildet ist, **dadurch gekennzeichnet, dass** das Widerlager (13) fest mit Ober- und/oder Unterwerkzeug (11, 10) des Werkzeugs (9) verbunden ist.

4. Werkzeug nach Anspruch 3, **dadurch gekennzeichnet, dass** das Widerlager (13) aus einem dreidimensional geformten, mit Durchbrüchen (20) versehenen Blechteil (21) besteht.

5. Werkzeug nach Anspruch 3, **dadurch gekennzeichnet, dass** das Widerlager (13) aus einer Vielzahl von in die Kavität (12) des Werkzeugs (9) auskragenden Stiften (14) besteht, deren freien Enden zur Anlage des Bauteils (18) vorgesehen sind.

## Claims

1. Method for producing a cushion element (4), in which method a component (18) suitable for forming a three-dimensional parting zone is introduced into a tool (9), and,
subsequently, at least one first foamable compound is introduced into a first spatial region of the tool (9), wherein, when said compound is foamed, the component (18) is moulded into a three-dimensional parting element (8) between a first foamed cushion region (5) and a further spatial region in the tool (9), and the component (18) is, during the moulding to form the three-dimensional parting element (8), pressed against a counterbearing (13) in the tool (9), wherein the component (18) is, before the introduction of the foamable compounds, introduced in two-dimensional fashion into the tool (9) and clamped so as to be capable of slippage,
**characterized in that**,
during the course of the manufacture of the cushion element (4), the counterbearing (13) is removed from said cushion element.

2. Method for producing a cushion element according to Claim 1, **characterized in that** a second foamable compound is introduced into a second spatial region of the tool (9) and, during the foaming of the first and second foamable compounds, the component (18) is moulded into a three-dimensional parting element (8) between a first foamed cushion region (5) and a second foamed cushion region (6) of the cushion element (4).

3. Tool for carrying out the method according to either of Claims 1 and 2, wherein the tool (9) has at least an upper tool (11), a lower tool (10) and a counterbearing (13) for the abutment of a component (18) which undergoes three-dimensional moulding, and means for receiving a component (18) in the form of a three-dimensionally mouldable sheetlike structure, wherein the means for receiving the component (18) comprise a slippage frame (15), wherein the slippage frame (15) is formed between upper tool (11) and lower tool (10), **characterized in that** the counterbearing (13) is connected fixedly to the upper and/or lower tool (11, 10) of the tool (9).

4. Tool according to Claim 3, **characterized in that** the counterbearing (13) is composed of a three-dimensionally formed sheet-metal part (21) equipped with apertures (20).

5. Tool according to Claim 3, **characterized in that** the counterbearing (13) is composed of a multiplicity of pins (14) which project into the cavity (12) of the tool (9) and the free ends of which are provided for the abutment of the component (18).

## Revendications

1. Procédé de fabrication d'un élément de rembourrage (4), dans lequel on introduit dans un outil (9) un composant (18) convenant pour la formation d'une zone de séparation tridimensionnelle et on charge ensuite au moins une première masse capable de mousser dans une première région spatiale de l'outil (9), dans lequel lors du moussage de cette masse on déforme le composant (18) en un élément de séparation tridimensionnel (8) entre une première région de rembourrage en mousse (5) et une autre région spatiale dans l'outil (9) et on presse le composant (18) pendant la formation de l'élément de séparation tridimensionnel (8) contre un appui opposé (13) dans l'outil (9), dans lequel, avant le chargement des masses capables de mousser, on introduit le composant (18) sous forme bidimensionnelle dans l'outil (9) et on le serre de telle façon qu'il puisse glisser, **caractérisé en ce que** l'on écarte l'appui opposé (13) de l'élément de rembourrage (4) au cours de la fabrication de celui-ci.

2. Procédé de fabrication d'un élément de rembourrage selon la revendication 1, **caractérisé en ce que** l'on charge une seconde masse capable de mousser dans une seconde région spatiale de l'outil (9) et, lors du moussage des première et seconde masses capables de mousser, on déforme le composant (18) en un élément de séparation tridimensionnel (8) entre une première région de rembourrage en mousse (5) et une seconde région de rembourrage en mousse (6) de l'élément de rembourrage (4).

3. Outil pour la mise en oeuvre du procédé selon une des revendications 1 à 2, dans lequel l'outil (9) présente au moins un outil supérieur (11), un outil inférieur (10) et un appui opposé (13) pour l'application d'un composant (18) se déformant en trois dimensions et des moyens destinés à recevoir un composant (18) sous la forme d'un produit plat déformable en trois dimensions, dans lequel les moyens destinés à recevoir le composant (18) comprennent un cadre glissant (15), dans lequel le cadre glissant (15) est formé entre l'outil supérieur (11) et l'outil inférieur (10), **caractérisé en ce que** l'appui opposé (13) est solidaire de l'outil supérieur et/ou de l'outil inférieur (11, 10) de l'outil (9).

4. Outil selon la revendication 3, **caractérisé en ce que** l'appui opposé (13) est constitué par une pièce de tôle (21) déformée en trois dimensions et munie de passages (20).

5. Outil selon la revendication 3, **caractérisé en ce que** l'appui opposé (13) se compose d'une multiplicité de tiges (14) saillantes dans la cavité (12) de l'outil (9), dont les extrémités libres sont prévues pour l'appui du composant (18).
